# FASCICULE DE BREVET EUROPEEN

(11) **EP 1 353 591 B1**
(45) Date de publication et mention de la délivrance du brevet: **21.03.2007**
(21) Numéro de dépôt: 02716211.4
(22) Date de dépôt: 24.01.2002
(51) Int. Cl.: A47J 31/40, A47J 31/46

(54) **DISPOSITIF D'INJECTION D'EAU POUR UN APPAREIL POUR LA CONFECTION D'UNE BOISSON A PARTIR D'UNE CAPSULE**
VORRICHTUNG ZUM EINSPRITZEN VON WASSER IN EIN GERÄT ZUR ZUBEREITUNG EINES GETRÄNKS AUS EINER KAPSEL
DEVICE FOR INJECTING WATER INTO AN APPARATUS FOR PREPARING A BEVERAGE FROM A CAPSULE

(30) Priorité: 24.01.2001 CH 12001
(43) Date de publication de la demande: 22.10.2003
(73) Titulaire: Monodor S.A., 1041 St. Barthélemy (CH)
(72) Inventeur: DENISART, Jean-Paul, CH-1093 La Conversion (CH)
(74) Mandataire: Reuteler, Raymond Werner
(86) Numéro de dépôt international: PCT/IB2002/000206
(87) Numéro de publication internationale: WO 2002/058523

(56) Documents cités:
- EP-A- 0 784 955
- US-A- 3 269 298
- US-A- 3 295 998
- US-A- 3 327 614
- US-A- 3 604 335
- US-A- 4 389 925

## Description

La présente invention concerne un dispositif d'injection d'eau sous pression pour un appareil pour la confection d'une boisson à partir d'une capsule contenant le produit à extraire, selon le préambule de la revendicaton 1. Un tel appareil est connu du document US 4 389 925 A.

On connaît depuis un certain nombre d'année des machines à café dites "espresso" qui utilisent des capsules contenant des doses de café moulu pour la préparation de café.

Dans ces appareils, un liquide est introduit sous pression à l'intérieur de la capsule située dans un logement de l'appareil par l'intermédiaire d'un porte-capsule, et le café liquide est recueilli à la sortie du porte-capsule.

Ces machines à café comportent généralement une pompe pour amener l'eau, un système de chauffage pour chauffer l'eau et un dispositif d'injection de l'eau dans la capsule.

En utilisation, on place une capsule dans un porte-capsule à poignée et on verrouille le porte-capsule à la machine à café grâce à un système à baïonnette en effectuant un mouvement de rotation de la poignée, de manière à placer la capsule dans un logement de la machine.

Lors de cette opération de verrouillage, le sommet de la capsule est perforé par une buse d'injection saillante, et le fond de la cartouche est perforé par des éléments saillants situés au fond du porte-capsule lors de la mise sous pression.

Ensuite, l'eau est injectée sous pression -dans la capsule par le dispositif d'injection et le café extrait est recueilli dans une tasse placée sous le porte-capsule.

Dans ce type de machine à café, la pression de l'eau chaude sortant de la buse d'injection peut atteindre 16 bars de sorte qu'il est nécessaire de réaliser une étanchéité parfaite lors du verrouillage du porte-capsule à la machine à café par le système à baïonnette, ce qui impose un effort important sur la poignée du porte-capsule lors de son serrage par rotation.

Cet effort sur la poignée entraîne généralement une rotation de la machine entière, de sorte qu'il est nécessaire de maintenir en place la machine à café avec la main libre. Par ailleurs, ce type de système se prête mal à une automatisation d'un procédé de chargement et d'éjection des capsules.

En outre, ce verrouillage peut être difficile à réaliser par des personnes faibles ou présentant un handicap au niveau de la main.

La présente invention vise à remédier à ces inconvénients, en fournissant un dispositif d'injection d'eau qui ne nécessite plus un verrouillage du porte-capsule à la machine à café par rotation manuelle de la poignée du porte-capsule. Ce but est obtenu par l'appareil selon la revendication 1.

Cet appareil comprend un dispositif d'injection d'eau comportant une tête d'injection reliée à une conduite d'alimentation d'eau, un système hydraulique pour déplacer la tête d'injection vers un porte-capsule positionné sous la tête d'injection, le système hydraulique étant relié à une conduite d'eau de piston interconnectée via une vanne de contrôle de verrouillage à une pompe, laquelle alimente également la tête d'injection.

La conduite d'eau d'alimentation est reliée à la tête d'injection et est - avantageusement interconnectée à la pompe via une vanne tarée à une certaine pression, par exemple aux alentours de 4 bars.

La conduite d'alimentation d'eau peut être branchée à une conduite de purge via une vanne de purge pour permettre la libération de pression dans la tête d'injection à la fin du cycle d'extraction d'une boisson.

La vanne de contrôle de verrouillage comprend avantageusement une position oùr la conduite d'eau de piston est reliée à une conduite de retour pour permettre la perte de pression et l'évacuation d'eau dans le système hydraulique.

Selon la revendication 1 le système hydraulique comporte un corps et un piston muni d'un joint annulaire enfermant un espace étanche relié à la conduite d'eau de piston, le piston et le joint ayant une forme et des dimensions telles que quand le piston se met en biais dans le corps, il cause une perte d'étanchéité et donc une perte de pression dans le système hydraulique.

La tête d'injection comporte une pluralité de pointes de perforation et d'injection réparties sur une surface intérieure pour l'injection d'eau dans la capsule comme une douche.

La tête d'injection a une forme générale d'un disque ayant un diamètre tel qu'elle puisse être montée de façon coulissante dans le corps du système hydraulique en butée contre le piston, le jeu radial entre la tête d'injection et le corps étant tel que la tête d'injection peut s'incliner d'un angle suffisant pour entraîner une perte d'étanchéité du piston.

La plaque de la tête d'injection peut être munie d'un passage s'étendant entre une partie de raccord pour le raccordement de la conduite d'alimentation et un espace au-dessus d'une plaque multi-pointes munie de pointes de perforation et d'injection, par son alimentation en eau d'injection.

La tête d'injection comporte des moyens d'attache auxquels sont attachés des ressorts de rappel fixés à l'autre bout à un cadre de support du dispositif d'injection d'eau pour retourner le piston et la tête d'injection en leur position de repos.

D'autres caractéristiques, les buts et les avantages de l'invention ressortiront plus clairement de la description suivante d'un exemple de réalisation, indiqué à titre non limitatif et illustré par les dessins annexés, dans lesquels:
la Fig. 1 représente une vue schématique d'un appareil selon la présente invention en position repos;
la Fig. 2 représente une vue schématique de l'appareil en début du cycle de fonctionnement;
la Fig. 3 représente une vue schématique de l'appareil pendant la phase d'injection d'eau et d'extraction du contenu de la capsule pour faire une boisson;
la Fig. 4 représente une vue schématique pendant la phase de purge de la tête d'injection;
la Fig. 5 représente une vue en perspective d'un dispositif d'injection d'eau selon la présente invention;
la Fig. 6 représente une vue en coupe transversale du dispositif d'injection d'eau représenté sur la Fig. 5;
la Fig. 7 représente une vue éclatée du dispositif d'injection d'eau représenté sur la Fig. 1;
la Fig. 8 représente une vue détaillée de la douche dynamique du dispositif d'injection d'eau représenté sur les Figs. 5 à 7;
la Fig. 9 représente une vue en coupe transversale de la douche dynamique représentée sur la Fig. 8;
la Fig. 10 représente une vue schématique du dispositif d'injection d'eau et d'un porte-capsule en position sous le dispositif, illustrant une fonction de sécurité de l'appareil.

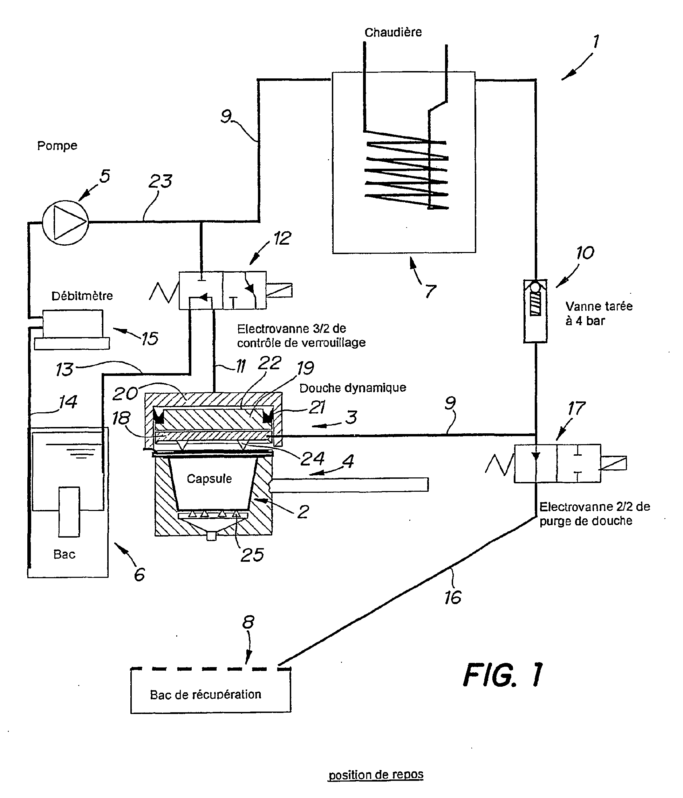

En se référant à la Fig. 1, un appareil pour la confection d'une boisson 1 à partir d'une capsule 2 comprend un dispositif d'injection d'eau 3, un porte-capsule 4 pour loger la capsule et l'amener sous le dispositif d'injection d'eau, une pompe d'alimentation d'eau 5, une source d'eau 6 telle qu'un bac d'eau, une chaudière 7 et un bac de récupération 8 positionné sous le dispositif d'injection d'eau 3 du porte-capsule 4.

Le dispositif d'injection 3 est interconnecté par une conduite d'alimentation 9 à la pompe 5. La conduite d'alimentation 9 traverse la chaudière 7 et une vanne 10 qui est tarée à une certaine pression, par exemple aux alentours de 4 bars, de sorte que l'alimentation de la tête d'injection 3 par l'eau d'injection s'effectue seulement quand un certain seuil de pression dans le système d'alimentation est atteint. La tête d'injection 3 est connectée en outre à la pompe 5 par une conduite d'eau de piston 11 via une vanne de contrôle de verrouillage 12, par exemple une électrovanne, qui permet d'interconnecter la conduite du piston 11 à la conduite de sortie 23 de la pompe 5 ou, dans une deuxième position, à une conduite de retour 13 au bac d'eau 6. La pompe 5 est interconnectée au bac d'eau 6 par une conduite d'alimentation d'eau 14 à travers un débit-mètre 15 qui permet de commander automatiquement le volume d'eau à injecter pour la préparation d'une boisson.

En aval de la vanne tarée 10, la conduite d'alimentation d'eau d'injection 9 est branchée à une conduite de purge 16 qui s'étend jusqu'au bac de récupération 8. La conduite de purge 16 traverse une vanne 17 de purge de l'eau d'injection, la vanne 17 étant par exemple une électrovanne à deux positions, une position ouverte et une position fermée.

Le dispositif d'injection d'eau 3 comporte une tête d'injection amovible 18 et un système hydraulique pour le déplacement de la tête d'injection vers la capsule 2. Dans la forme d'exécution illustrée, le système hydraulique comporte un piston 19 coulissant dans un corps 20 du dispositif d'injection. Le piston 19 est muni d'un joint 21 de façon à enfermer de manière étanche un espace 22 entre le piston et le corps pour l'injection d'eau par la conduite d'eau de piston 11 pour engendrer le déplacement du piston 19. La tête d'injection 18 est en appui contre le piston 19 et est donc entraînée par le piston quand elle se déplace vers la capsule.

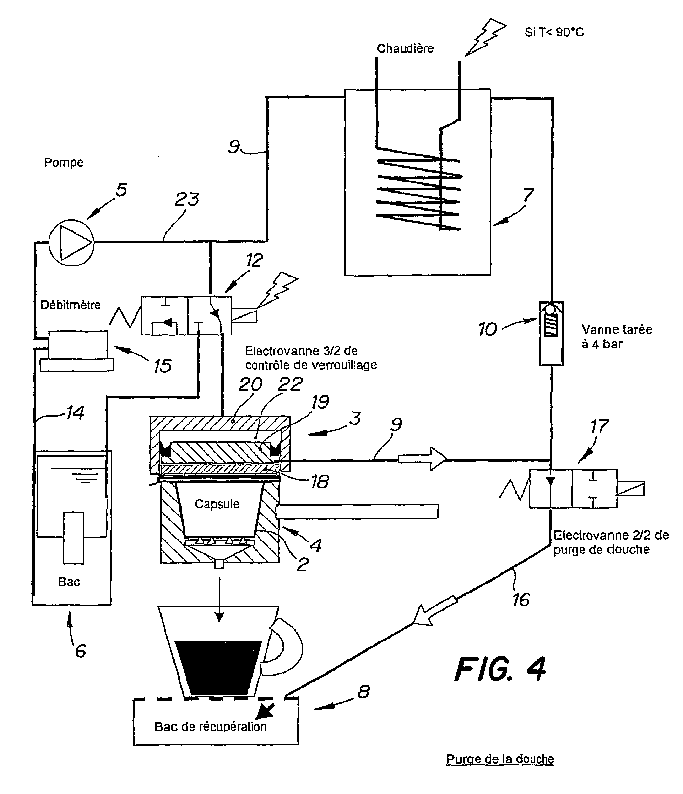

A l'aide des Figures 1 à 4 on décrira maintenant les opérations qu'effectue l'appareil pour la confection d'une boisson.

La Fig. 1 montre la position de repos dans laquelle la vanne de contrôle de verrouillage 12 est dans une première position où la conduite d'eau de piston 11 connectée au dispositif d'injection 3 est reliée à la conduite de retour 13, de sorte que la pression dans l'espace 22 du système hydraulique est à la pression atmosphérique. La tête d'injection 18 et le piston 19 sont dans une position haute, maintenus par des ressorts, par exemple, les détails de la construction étant décrits plus loin.

Dans la position de repos selon la Fig. 1, la vanne de purge du dispositif d'injection est dans une première position où la conduite d'alimentation d'eau d'injection 9 est reliée au bac de récupération 8 par la conduite 16.

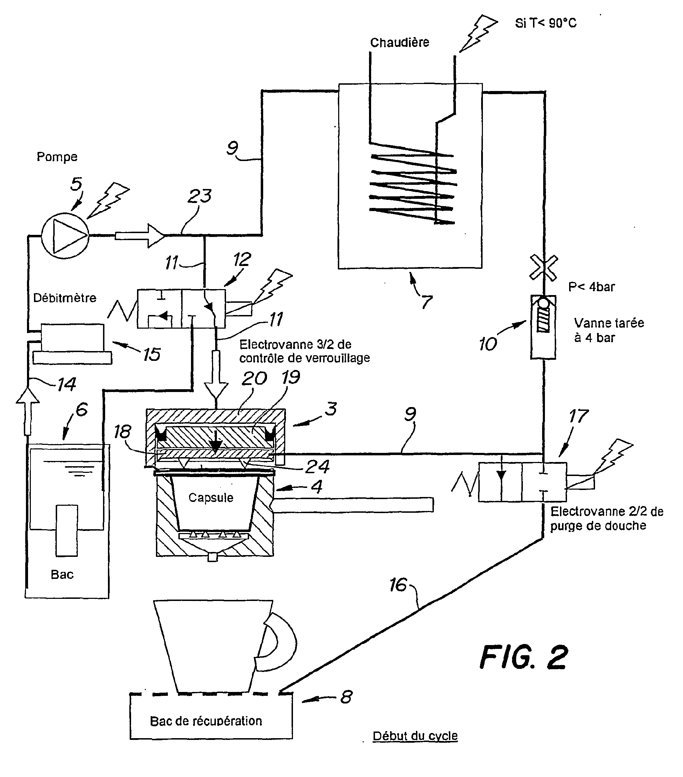

Pour débuter le cycle de préparation d'une boisson, la vanne de contrôle de verrouillage est déplacée vers sa deuxième position, tel qu'illustré à la Fig. 2, de sorte que la conduite d'eau de piston 11 est reliée à la conduite de sortie 23 de la pompe 5. En outre, la vanne de purge d'injection 17 est déplacée dans sa première position de façon à ce que la conduite de purge 16 n'est plus reliée à la conduite d'alimentation 9.

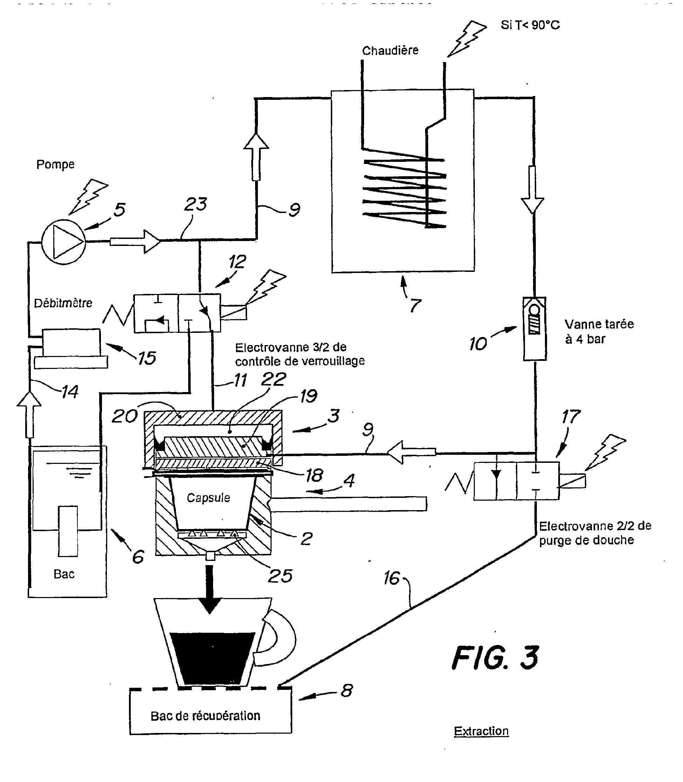

La pression d'eau d'alimentation fournie par la pompe déplace le piston 19 ainsi que la tête d'injection vers la capsule jusqu'à ce que la tête d'injection bute contre la périphérie du couvercle de la capsule plaquée contre le rebord supérieur du porte-capsule, tel que montré à la Fig. 3. Dans cette position, les pointes de perforation et d'injection 24 auront perforé le couvercle de la capsule. Le déplacement du piston et de la tête d'injection est ainsi bloqué et fait monter la pression dans la conduite d'alimentation 9 jusqu'à ce que le seuil de pression de la vanne tarée 10 est atteint, de sorte que de l'eau alimente la tête d'injection et est injectée dans la capsule par des orifices dans les pointes de perforation et d'injection 24. Bien entendu, pendant ce cycle la chaudière est en marche pour chauffer l'eau à injecter, le cas échéant.

Il y a de préférence une multitude de pointes de perforation et d'injection 24 réparties sur la surface de la tête d'injection de façon à ce que l'eau est injectée sous pression sous forme d'une douche, répartie sur la surface supérieure de la capsule, de façon à bien- mouiller le café ou autre -substance pour préparation de boissons telles que le thé ou le bouillon, avant de ressortir par les perforations formées dans le fond de la capsule. Le fond du porte-cartouche est muni de pointes de perforation et d'extraction 25 pour percer la capsule lorsqu'une certaine pression est atteinte. Pendant le cycle d'injection, la pression est maintenue sur le piston 19 pour assurer l'étanchéité de la tête d'injection en butée contre le rebord supérieur du porte-capsule pour assurer l'étanchéité à l'intérieur du porte-capsule pendant l'injection d'eau et de la vapeur.

En raison de la vanne tarée, la pression d'application de la tête d'injection contre le porte-capsule est assurée par une pression minimale bien définie, de façon à garantir une bonne et fiable étanchéité.

D'autre part, étant donné qu'il n'y a qu'une pompe alimentant parallèlement le piston et l'eau à injecter dans la capsule, la pression sur le piston est en tout cas toujours plus élevée que la pression dans la capsule de façon à assurer l'étanchéité du système indépendamment des variations de pression, c'est-à-dire que la force de plaquage de la tête d'injection contre le porte-capsule serait toujours plus élevée que la force résultant de la pression dans la capsule sur la tête d'injection.

En outre, le système est peu compliqué et ne nécessite pas de pompe ou de moyen de génération de pression supplémentaire pour déplacer la tête d'injection.

Une fois que la quantité de liquide voulue pour la préparation de la boisson a été débitée, suite au contrôle du débit-mètre, la pompe d'alimentation 5 est arrêtée et la vanne de purge 17 de la tête d'injection est déplacée sur sa première position pour que la pression dans la capsule 2 et la tête d'injection 18 soit -libérée, un reste d'eau chaude pouvant retourner à travers la vanne de purge pour s'écouler dans le bac de récupération 8.

Juste après l'opération de purge de la tête d'injection, la vanne de contrôle de verrouillage 12 est déplacée dans sa première position pour permettre le retour de l'eau dans l'espace du piston 22 dans le bac d'eau 6.

Un avantage de ce système est que l'eau utilisée pour déplacer le piston est de l'eau froide, de sorte qu'il n'y a aucun retour d'eau chaude dans le bac, ce qui aurait le désavantage de favoriser la prolifération de bactéries. Cette dernière étape se termine donc par la position de repos, tel que montré à la Fig. 1.

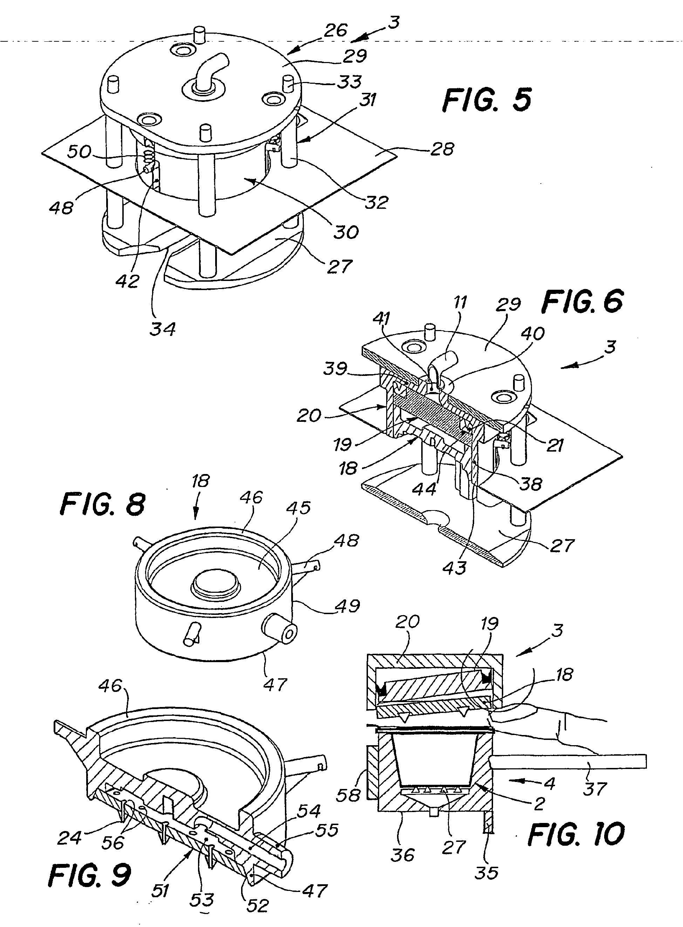

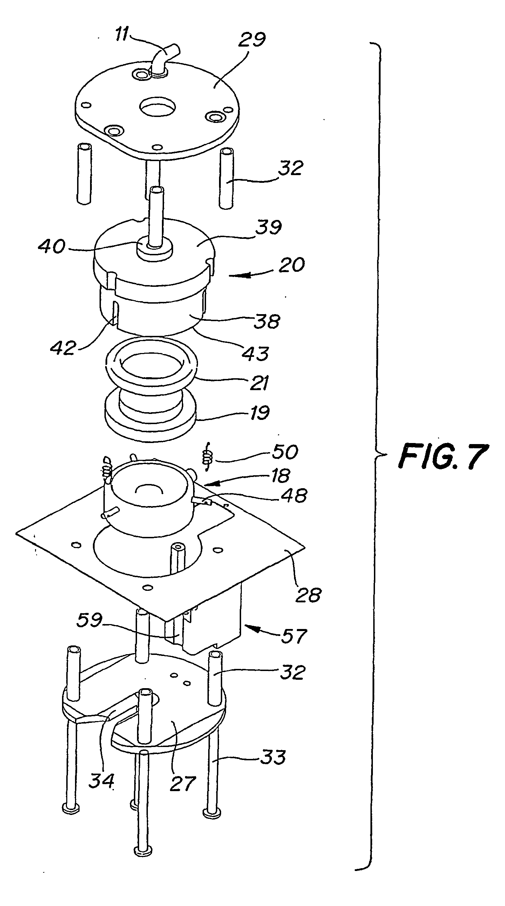

En se référant aux Figures 5, 6 et 7, le dispositif d'injection d'eau 3 comprend: un cadre de support formé d'une plaque de base 27, d'une paroi intermédiaire 28 qui peut par exemple faire partie du boîtier de l'appareil, et d'une plaque supérieure 29, les plaques et la paroi étant fixées ensemble, mais maintenues écartées les unes des autres par des moyens d'écartement et de fixation 31, par exemple sous forme de piliers 32 fixés aux plaques par des vis et des écrous 33; un système hydraulique 30 fixé sous la plaque supérieure 29; et la tête d'injection 18.

La plaque inférieure 27 comporte un moyen de guidage 34 sous forme d'une encoche s'étendant de son bord vers son centre prévue pour faciliter le placement et l'orientation correcte d'un porte-capsule sous la tête d'injection 18. Le porte-capsule comprend un moyen de guidage complémentaire, par exemple sous forme d'une protubérance 35 sous la face inférieure 36 du côté proche de la manche 37 (voir Fig. 10).

Le système hydraulique comporte le corps 20 abritant dans sa partie intérieure creuse le piston 19 et la tête d'injection 18 coulissants.

Le corps 20 comporte une partie cylindrique 38, creuse, et une partie de couvercle 39, cette partie de couvercle comportant un moyen de raccordement 40 à la conduite d'eau de piston 19. Dans cet exemple, le moyen de raccordement comporte une partie saillante assise dans un trou traversant la plaque supérieure et munie d'un orifice 41 de manière à créer un passage pour l'injection d'eau de piston dans l'espace étanche formé par le corps 20 et le piston 19.

La partie cylindrique 39 du corps 20 comporte trois encoches 42 allongées, réparties symétriquement et s'étendant à partir de son bord libre inférieur 43 sur une certaine distance en direction de la partie de couvercle 39.

Le piston 19 comporte une plaque épaisse en forme de disque et un joint annulaire 21 ayant une forme essentiellement en V en section transversale. Le joint est assis dans une rainure 44 sous forme d'une marche à la périphérie supérieure de la plaque.

Le joint 21 permet le contact étanche entre la paroi intérieure de la partie cylindrique du corps 20 et le piston 19, tant que le piston n'est pas de biais. Toutefois, étanchéité est perdue lorsque le piston s'incline d'un certain angle de sa position en opération normale, tel que montré dans la Fig. 10. Cet aspect de l'invention a l'avantage d'améliorer la sécurité de l'appareil, puisqu'un objet coincé entre le rebord supérieur du porte-capsule 4 et la tête d'injection 18 incline le piston entraînant ainsi la perte d'étanchéité et donc de pression dans le système hydraulique, de sorte que la force de descente du piston devient très faible.

- La tête d'injection 18, représentée en détail aux -Figs. 8 et 9, comporte une plaque 45 en forme de disque, comportant un rebord annulaire supérieur 46 saillant vert le haut, et un rebord annulaire inférieur 47 saillant vers le bas. Le diamètre de la plaque 45 par rapport au diamètre de la plaque cylindrique creuse 38 du corps 20 est dimensionné de façon à créer un jeu suffisant pour permettre l'inclinaison de la tête d'injection, et par conséquent du piston 19, d'un angle suffisant pour assurer la perte d'étanchéité compte tenu des caractéristiques du joint.

La tête d'injection 18 comporte en outre trois tiges 48 s'étendant dans une direction radiale de la surface cylindrique extérieure 49 de la plaque, chacune de ces tiges ayant une position et une taille adaptées pour s'étendre à travers une encoche 42 respective du corps 20, après insertion de la tête d'injection dans la partie cylindrique creuse du corps. Ces tiges servent de moyens d'attache pour des ressorts de rappel 50 fixés de l'autre côté de la plaque supérieure pour le retour du piston 19 dans sa position haute après le cycle de purge de la douche et pendant la position de repos de l'appareil. Une plaque de douche multi-pointes 51 est calée de manière étanche contre la surface intérieure 52 du rebord inférieur 47 de façon à former un espace de distribution d'eau d'injection 53 entre la plaque de douche et la partie centrale de la plaque de la tête d'injection. La plaque de la tête d'injection 45 est munie d'un passage 54 muni d'un raccord 55 pour être connectée avec la conduite d'alimentation 9 de l'appareil, le passage 54 débouchant dans l'espace 53 pour l'injection d'eau. L'eau alimentée dans l'espace 53 est injectée dans la capsule à travers des orifices 56 traversant les pointes de perforation 24.

Le dispositif d'injection d'eau est également muni d'un capteur de présence 57 détectant la présence ou non du porte-capsule 4 dans sa position correcte sous la tête d'injection. La mise en marche du cycle d'injection d'eau et d'extraction de la boisson est bloquée tant que le porte-capsule n'est pas dans une position bien définie par rapport au capteur 57, c'est-à-dire-dans sa-position correcte sous la tête d'injection, principalement pour des raisons de sécurité.

Afin d'avoir un système fiable qui ne détecte pas un objet autre qu'un porte-capsule, le porte-capsule est muni d'un aimant 58 disposé sur le côté opposé de la manche 37, qui s'insère dans une encoche complémentaire 59 du capteur de présence 57 dans la position de marche. Le capteur de présence 57 est, dans cet exemple, un capteur de champ magnétique. D'autres objets non-magnétiques ou n'ayant pas la forme appropriée ne sont pas détectés par le capteur 57, de façon à assurer un haut niveau de sécurité.

L'appareil selon l'invention permettrait de facilement automatiser le chargement et l'éjection de capsules par des mécanismes relativement simples, puisqu'il n'est pas nécessaire d'avoir un mécanisme qui verrouille le porte-capsule au dispositif d'injection de manière serrée, mais qui simplement place le porte-capsule sous le dispositif d'injection. Pour un système de chargement de porte-capsule manuel tel que représenté dans les figures, le simple positionnement du porte-capsule sous la tête d'injection permet de réaliser des porte-capsule légers dans des matériaux peu coûteux, tels que des matières plastiques, ce qui permet aussi de fournir plusieurs porte-capsules, chacun pour une boisson différente, de façon à ne pas altérer le goût d'une boisson par le goût d'une autre.

L'appareil selon l'invention a aussi l'avantage d'avoir un système hydraulique simple, ne nécessitant qu'une pompe.

## Revendications

1. Appareil pour la confection d'une boisson à partir d'une capsule contenant le produit à extraire, l'appareil comportant un dispositif d'injection d'eau (3) comprenant une tête d'injection (18) reliée à une conduite d'alimentation d'eau (9), et un système hydraulique pour déplacer la tête d'injection vers un porte-capsule (4) positionné sous la tête d'injection, le système hydraulique étant relié à une conduite d'eau de piston (11) interconnectée via une vanne de contrôle de verrouillage (12) à une pompe (5), laquelle alimente également la tête d'injection, **caractérisé en ce que** le dispositif d'injection d'eau (3) comporte un corps (20) et un piston (19) muni d'un joint annulaire (21) enfermant un espace étanche (22), le piston (19) et le joint (21) ayant une forme et des dimensions telles que le piston puisse se mettre en biais dans le corps (20) pour causer une perte d'étanchéité et une perte de pression dans le système hydraulique.

2. Appareil selon la revendication 1, **caractérisé en ce que** la conduite d'eau d'alimentation reliée à la tête d'injection (18) est interconnectée à la pompe (5) via une vanne (10) tarée à une certaine pression.

3. Appareil selon la revendication 2, **caractérisé en ce que** la vanne (10) est tarée à une pression aux alentours de 4 bars.

4. Appareil selon l'une des revendications précédentes, **caractérisé en ce que** la conduite d'alimentation d'eau (9) est branchée à une conduite de purge (16) via une vanne de purge (17) pour permettre la libération de pression dans la tête d'injection à la fin du cycle d'extraction d'une boisson.

5. Appareil selon l'une des revendications précédentes, **caractérisé en ce que** la vanne de contrôle de verrouillage (12) disposée entre le système hydraulique et la pompe comprend une position pour la conduite d'eau de piston (11), reliée à une conduite de retour (13) pour permettre la perte de pression et l'évacuation d'eau dans le système hydraulique.

6. Appareil selon l'une des revendications précédentes, **caractérisé en ce que** la tête d'injection (18) comporte une pluralité de pointes de perforation et d'injection réparties sur une surface intérieure pour l'injection d'eau dans la capsule comme une douche.

7. Appareil selon l'une des revendications précédentes, **caractérisé en ce que** la tête d'injection a une forme générale d'un disque ayant un diamètre tel qu'elle puisse être montée de façon coulissante dans le corps (20) du système hydraulique en butée contre le piston (19).

8. Appareil selon l'une des revendications précédentes, **caractérisé en ce que** le jeu radial entre la tête d'injection (18) et le corps (20) est tel que la tête d'injection peut s'incliner d'un angle suffisant pour entraîner une perte d'étanchéité du piston (19) en butée contre la tête d'injection.

9. Appareil selon l'une des trois revendications précédentes, **caractérisé en ce que** la plaque de la tête d'injection est munie d'un passage (54) s'étendant entre une partie de raccord (55) pour le raccordement de la conduite d'alimentation (9), et un espace (53) au-dessus d'une plaque multi-pointes (51) munie de pointes de perforation et d'injection (24).

10. Appareil selon l'une des revendications précédentes, **caractérisé en ce que** la tête d'injection (18) comporte des moyens d'attache (47) auxquels sont attachés des ressorts de rappel fixés de l'autre côté d'un cadre de support du dispositif d'injection d'eau pour retourner le piston (19) de la tête d'injection (18) en leur position de repos.

## Claims

1. An apparatus for preparing a beverage from a capsule containing the product to be extracted, the apparatus having a water injecting device (3) including an injection head (18) connected to a water supply conduit (9) and a hydraulic system for displacing the injection head towards a capsule-holder (4) positioned beneath the injection head, the hydraulic system being connected to a piston water conduit (11) interconnected, via a locking control valve (12), to a pump (5) which also feeds the injection head, **characterised in that** the water injecting device (3) includes a body (20) and a piston (19) provided with an annular seal enclosing water-tightly a space (22), the piston (19) and the seal (21) having a shape and a size such that the piston may assume a slanted position in the body (20), to cause a breakdown of the water-tightness and a loss of pressure in the hydraulic system.

2. An apparatus according to claim 1, **characterised in that** the water supply conduit, which is connected to the injection head (18), is interconnected with the pump (5), via a valve (10), calibrated to operate at a certain pressure.

3. An apparatus according to claim 2, **characterised in that** the valve (10) is calibrated to operate at a pressure in the vicinity of 4 bars.

4. An apparatus according to one of the preceding claims, **characterised in that** the water supply conduit (9) is connected to a discharge conduit (16) via a discharge valve (17), to enable a release of the pressure in the injection head at the end of the beverage extraction cycle.

5. An apparatus according to one of the preceding claims, **characterised in that** the locking control valve (12), arranged between the hydraulic system and the pump, includes a position in which the piston water conduit (11) is connected to a return conduit (13) for enabling a loss of pressure and discharge of water in the hydraulic system.

6. An apparatus according to one of the preceding claims, **characterised in that** the injection head (18) includes a plurality of perforating and injecting spikes distributed over a lower surface, for injecting water into the capsule, in the manner of a shower head.

7. An apparatus according to one of the preceding claims, **characterised in that** the injection head has the general shape of a disk with a diameter such that it can be mounted slidably in the body (20) of the hydraulic system, to abut against the piston (19).

8. An apparatus according to one of the preceding claims, **characterised in that** the radial clearance between the injection head (18) and the body (20) is such that the injection head can assume a slanted position, at an angle which is sufficient to cause a breakdown of the water-tightness of the piston (19) abutting against the injection head.

9. An apparatus according to one of the three preceding claims, **characterised in that** the plate of the injection head is provided with a passage (54) extending between a connector part (55) for connecting the supply conduit (9) and with a space (53) above a plate (51) provided with multiple perforating and injecting spikes (24).

10. An apparatus according to one of the preceding claims, **characterised in that** the injection head (18) includes attachment means (47) to which are attached return springs, which are fastened at their other end to a support frame of the water injecting device, for returning the piston (19) and the injection head (18) to their standby position.

## Patentansprüche

1. Gerät für die Zubereitung eines Getränks aus einer Kapsel, die das zu extrahierende Produkt enthält, wobei das Gerät eine Wassereinspritzvorrichtung (3) mit einem an eine Wasserversorgungsleitung (9) angeschlossenen Einspritzkopf (18) sowie ein hydraulisches System aufweist, um den Einspritzkopf zu einem Kapselträger (4) hin zu bewegen, der unter den Einspritzkopf gebracht wurde, und das hydraulische System mit einer Kolbenwasserleitung (11) verbunden ist, die über ein Verriegelungssteuerventil (12) mit einer Pumpe (5) verbunden ist, die ebenfalls den Einspritzkopf versorgt, **dadurch gekennzeichnet, dass** die Wassereinspritzvorrichtung (3) einen Körper (20) und einen Kolben (19) aufweist, der mit einer Ringdichtung (21) versehen ist und einen dichten Raum (22) umschliesst, wobei der Kolben (19) und die Dichtung (21) eine solche Gestalt und Dimensionen besitzen, dass sich der Kolben im Körper (20) schief legen kann, um einen Verlust der Dichtheit und einen Druckverlust im hydraulischen System zu bewirken.

2. Gerät nach Anspruch 1, **dadurch gekennzeichnet, dass** die mit dem Einspritzkopf (18) verbundene Wasserversorgungsleitung über ein auf einen bestimmten Druck kalibriertes Ventil (10) mit der Pumpe (5) verbunden ist.

3. Gerät nach Anspruch 2, **dadurch gekennzeichnet, dass** das Ventil (10) auf einen Druck von ungefähr 4 Bar kalibriert ist.

4. Gerät nach einem der vorangehenden Ansprüche, **dadurch gekennzeichnet, dass** die Wasserversorgungsleitung (9) über ein Spülventil (17) an eine Spülleitung (16) angeschlossen ist, um am Ende des Zyklus der Extraktion eines Getränks den Abbau des Drucks im Einspritzkopf zu ermöglichen.

5. Gerät nach einem der vorangehenden Ansprüche, **dadurch gekennzeichnet, dass** das zwischen dem hydraulischen System und der Pumpe angeordnete Verriegelungssteuerventil (12) eine Position für die Kolbenwasserleitung (11) umfasst, die mit einer Rückleitung (13) verbunden ist, um den Druckverlust und die Entleerung des Wassers im hydraulischen System zu ermöglichen.

6. Gerät nach einem der vorangehenden Ansprüche, **dadurch gekennzeichnet, dass** der Einspritzkopf (18) eine Vielzahl von Perforations- und Injektionsspitzen aufweist, die über eine Innenfläche verteilt sind, um Wasser wie eine Dusche in die Kapsel einzuspritzen.

7. Gerät nach einem der vorangehenden Ansprüche, **dadurch gekennzeichnet, dass** der Einspritzkopf die allgemeine Gestalt einer Scheibe mit einem solchen Durchmesser hat, dass er gleitend und im Anschlag am Kolben (19) in den Körper (20) des hydraulischen Systems montiert werden kann.

8. Gerät nach einem der vorangehenden Ansprüche, **dadurch gekennzeichnet, dass** das radiale Spiel zwischen dem Einspritzkopf (18) und dem Körper (20) derart ist, dass sich der Einspritzkopf um einen genügend grossen Winkel neigen kann, so dass ein Verlust der Dichtheit des Kolbens (19) im Anschlag am Einspritzkopf bewirkt wird.

9. Gerät nach einem der drei vorangehenden Ansprüche, **dadurch gekennzeichnet, dass** die Platte des Einspritzkopfes mit einem Kanal (54) versehen ist, der sich zwischen einem Anschlussabschnitt (55) für den Anschluss der Versorgungsleitung (9) und einem Raum (53) über einer Platte (51) mit vielen Spitzen erstreckt, die mit Perforations- und Injektionsspitzen (24) versehen ist.

10. Gerät nach einem der vorangehenden Ansprüche, **dadurch gekennzeichnet, dass** der Einspritzkopf (18) Befestigungsmittel (47) aufweist, an denen Rückstellfedern angebracht sind, die an der anderen Seite eines Stützrahmens der Wassereinspritzvorrichtung befestigt sind, um den Kolben (19) und den Einspritzkopf (18) in ihre Ruhelage zurückzubringen.
